# EUROPÄISCHE PATENTSCHRIFT

(11) **EP 3 197 714 B1**
(45) Veröffentlichungstag und Bekanntmachung des Hinweises auf die Patenterteilung: **13.05.2020**
(21) Anmeldenummer: 15756910.4
(22) Anmeldetag: 31.08.2015
(51) Int. Cl.: B60P 7/08, E05B 85/04, B60N 2/28

(54) **BEFESTIGUNGSANORDNUNG IN EINEM FAHRZEUG**
FASTENING ARRANGEMENT IN A VEHICLE
SYSTÈME DE FIXATION DANS UN VÉHICULE

(30) Priorität: 23.09.2014 DE 102014219160
(43) Veröffentlichungstag der Anmeldung: 02.08.2017
(73) Patentinhaber: Volkswagen Aktiengesellschaft, 38440 Wolfsburg (DE)
(72) Erfinder: WAGNER, Rolf, 38551 Ribbesbüttel (DE); KUHLEE, Marcus, 03130 Spremberg (DE)
(86) Internationale Anmeldenummer: PCT/EP2015/069865
(87) Internationale Veröffentlichungsnummer: WO 2016/045912

(56) Entgegenhaltungen:
- EP-A1- 2 384 925
- DE-A1-102012 104 589
- US-A1- 2004 080 194
- US-A1- 2004 227 384

## Beschreibung

Die vorliegende Erfindung betrifft eine Befestigungsanordnung für ein Fahrzeug nach dem Oberbegriff des Patentanspruchs 1.

Derartige Haltebügel dienen zum Beispiel als Verzurrösen in Gepäckräumen von Kraftfahrzeugen zur Sicherung von Ladegut, als Isofixhalter zur Befestigung von Kindersitzen, als Bügel für Lehnenhalter, etc. und müssen dementsprechend eine hohe Zugfestigkeit aufweisen. Die Haltebügel zumeist aus Stahl können in Halteplatten oder direkt in Strukturbauteile eingesetzt sein, wobei diese vorteilhaft mit abgebogenen Fußabschnitten die Halteplatten oder Strukturbauteile hintergreifen. Sind die Fußabschnitte gegenläufig abgebogen, so ist eine zum Beispiel langlochförmige, relativ große Ausnehmung erforderlich, um den Haltebügel "von hinten" einschieben und anschließend zum Beispiel durch Verschweißen der Fußabschnitte am Halteteil oder Strukturbauteil befestigen zu können.

Aus der DE 10 2011 016 291 A1 ist eine Befestigungsanordnung für ein Fahrzeug bekannt. Diese weist ein karosserieseitiges Blechteil und einen daran befestigten U-förmigen Haltebügel auf, der mit einem Basissteg und daran anschließenden U-Schenkeln ausgebildet ist, von denen endseitig jeweils Fußabschnitte abgewinkelt sind. Die endseitigen Fußabschnitte des Haltebügels untergreifen das karosserieseitige Blechteil und sind mit diesem verschweißt.

In der obigen Befestigungsanordnung sind die beiden Fußabschnitte durch eine gemeinsame schlitzförmige, langlochartige Ausnehmung geführt, die geometrisch bedingt die Grundsteifigkeit des Blechteils reduziert. Zudem sind die Fußabschnitte nicht zueinander gegenläufig, sondern gleichläufig abgebogen, so dass diese nur einseitig am Blechteil abgestützt sind, was im Hinblick auf eine Krafteinleitung nachteilig ist.

Aus der DE 10 2012 104 589 A1 ist eine gattungsgemäße Befestigungsanordnung für ein Fahrzeug bekannt, die als eine Verzurröse realisiert ist. Weitere Befestigungsanordnungen für ein Fahrzeug sind aus der US 2004/0227384 A1, aus der US 2004/0080194 A1 und aus der EP 2 384 925 A1 bekannt.

Die Aufgabe der Erfindung besteht darin, eine Befestigungsanordnung bereitzustellen, die praktisch ohne Mehraufwand eine erhöhte Festigkeit und gegebenenfalls eine vereinfachte Montage aufweist.

Die Aufgabe ist durch die Merkmale des Patentanspruches 1 gelöst. Vorteilhafte Ausgestaltungen der Erfindung sind Gegenstand der Unteransprüche.

Erfindungsgemäß wird zur Erhöhung der Grundsteifigkeit des Blechteils auf eine gemeinsame schlitzförmige oder langlochartige Ausnehmung verzichtet. Anstelle dessen weist das erfindungsgemäße Blechteil im Abstand der beiden U-Schenkeln des Haltebügels voneinander separate Ausnehmungen auf, durch die die U-Schenkel mit ihren Fußabschnitten geführt sind. Die Fußabschnitte der U-Schenkel sind bevorzugt so ausgeführt, dass der Haltebügel in die beiden Ausnehmungen durch eine Schwenk-Kippbewegung einfädelbar ist. Der Haltebügel kann damit "von vorne" in das Halteteil eingesetzt und dann mit diesem stoffschlüssig, insbesondere durch eine Buckelschweißverbindung, fest verbunden werden. Durch die Vermeidung eines Langloches im Blechteil ist die Festigkeit der Verbindung deutlich erhöht.

Der Haltebügel kann in bekannter Weise aus Rundmaterial hergestellt sein, wobei die Ausnehmungen ca. 2mm größer als der Drahtdurchmesser sind. Dies sichert den erforderlichen Freigang für die Schwenk- und Kippbewegung beim Einsetzen des Haltebügels. Die Ausnehmungen können beispielhaft kreisrund sein oder Mehrkant-Randkonturen aufweisen, das heißt zum Beispiel als Sechskantlöcher ausgebildet sein.

Die U-Schenkel und der Basissteg des Haltebügels spannen eine Drahtbügelebene auf, von der die Fußabschnitte zueinander gegenläufig abragen können, das heißt beidseitig abgestellt sein können. Durch die beidseitige Abstellung der Fußabschnitte ergibt sich eine stabile Halterung des Haltebügels sowie eine, im Vergleich zu einer einseitigen Abstellung, verbesserte Krafteinleitung. Bevorzugt können die Fußabschnitte um einen Biegewinkel von 90° von den U-Schenkeln abgebogen sein. In diesem Fall liegen die Fußabschnitte in einer zur Drahtbügelebene rechtwinkligen Ebene und können diese bevorzugt zueinander parallel angeordnet sein.

Im Hinblick auf eine einfache, leichtgängige Montagefolge ist die Länge der Fußabschnitte, die Querschnittsgröße der Ausnehmungen und ein Abstellwinkel von Bedeutung, der zwischen den Fußabschnitten und der Haltebügelebene aufgespannt wird. Beispielhaft können die beiden Fußabschnitte bei einem Abstellwinkel von 90° rechtwinklig von der Drahtbügelebene abragen.

In diesem Fall ist ein stark vergrößerter Querschnitt der Blechteil-Ausnehmungen erforderlich, um eine einfache Montage zu gewährleisten. Ein derart vergrößerter Querschnitt der Ausnehmungen resultiert jedoch in einer reduzierten Blechteil-Steifigkeit.
Vor diesem Hintergrund ist es besonders bevorzugt, wenn die beiden Fußabschnitte in einer zueinander verschränkten Anordnung positioniert sind, bei der die beiden Fußabschnitte verdreht sind. Das heißt jeder Fußabschnitt ist in Richtung auf den gegenüberliegenden U-Schenkel geneigt und schließt einen spitzen Winkel mit der Drahtbügelebene ein. Die Fußabschnitte können zum Beispiel einen Abstellwinkel von zum Beispiel 15° bis 60° mit der Haltebügelebene einschließen und jeweils nach innen verdreht sein. Auf diese Weise können die beiden Fußabschnitte in einer leichtgängigen Einfädelbewegung durch die Blechteil-Ausnehmungen geführt werden, und zwar bei vergleichsweise reduziertem Ausnehmungs-Querschnitt. Zur weiteren Montagevereinfachung können beide Fußabschnitte parallel zueinander ausgerichtet verdreht sein, so dass der dadurch symmetrisch ausgebildete Haltebügel auch auf Umschlag montierbar ist.

Das Blechteil kann in an sich bekannter Weise eine Halteplatte sein, die nach der Befestigung des Haltebügels mit einem angrenzenden Strukturbauteil der Karosserie eines Kraftfahrzeugs fest verbindbar ist. Alternativ dazu kann das Blechteil unmittelbar durch ein Strukturbauteil der Karosserie des Kraftfahrzeugs gebildet sein.

Die vorstehend erläuterten und/oder in den Unteransprüchen wiedergegebenen vorteilhaften Aus- und/oder Weiterbildungen der Erfindung können - außer zum Beispiel in den Fällen eindeutiger Abhängigkeiten oder unvereinbarer Alternativen - einzeln oder aber auch in beliebiger Kombination miteinander zur Anwendung kommen.

Es zeigen:
- Fig. 1: einen U-förmigen Haltebügel aus Runddraht in raumbildlicher Darstellung, mit einem Basissteg, zwei senkrecht dazu abragenden U-Schenkeln und zwei 90° dazu abgebogenen Fußabschnitten;
- Fig. 2: den Haltebügel in einer Seitenansicht;
- Fig. 3: das Blechteil in einer Alleinstellung sowie mit zwei kreissymmetrischen Ausnehmungen zum Einsetzen des Haltebügels; und
- Fig. 4: die Befestigungsanordnung mit dem Haltebügel und dem Blechteil im Endmontagezustand.

Der in den Figuren gezeigte Haltebügel 1 ist bevorzugt aus einem Stahl-Runddraht definierten Durchmessers hergestellt und weist einen geradlinigen Basissteg 2, zwei senkrecht dazu abragende U-Schenkel 3 und zwei gegenläufig in einem Winkel α von 90° abgebogene Fußabschnitte 5 auf. Die Länge der Fußabschnitte 5 kann etwa der Höhe der U-Schenkel 3 entsprechen.

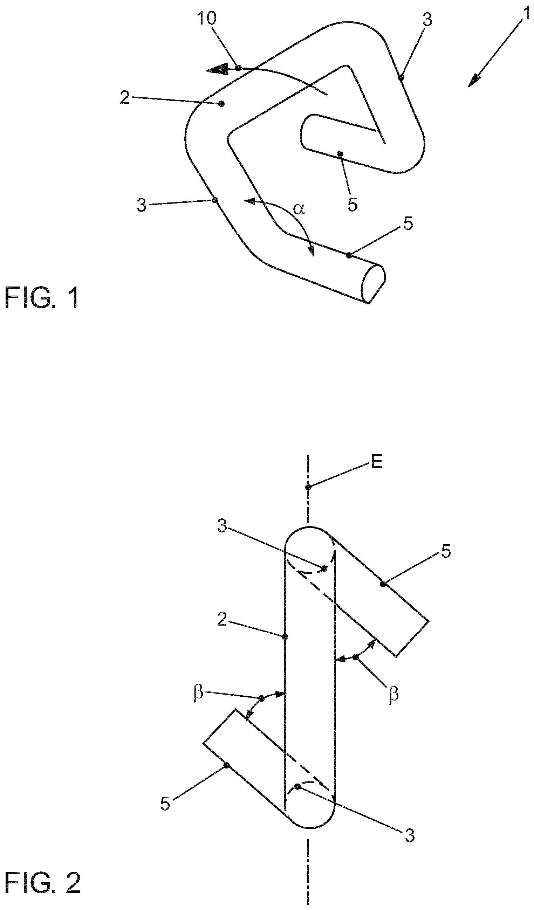

Wie aus der Fig. 2 hervorgeht, spannen die U-Schenkel 3 und der Basissteg 2 des Haltebügels 1 eine Drahtbügelebene E auf, von der die Fußabschnitte 5 einander gegenläufig, das heißt zu den beiden Seiten der Ebene E abragen. Die Fußabschnitte 5 sind um einen Abkantwinkel α (Fig. 1) von 90° von den U-Schenkeln 3 abgebogen und zueinander parallel angeordnet sind.

Zudem sind die Fußabschnitte 5 in den Figuren in einer verschränkten Anordnung positioniert, bei der die Fußabschnitte 5 mit dem Abstellwinkel β (Fig. 2) von ca. 15° bis 60°, insbesondere von ca. 30° bis 45° und parallel zueinander nach innen (in Richtung auf die Mitte des Basisstegs 2) verdreht ausgerichtet. Das heißt, dass jeder der beiden Fußabschnitte 5 in Richtung auf den gegenüberliegenden U-Schenkel 3 geneigt ist und einen spitzen Abstellwinkel β mit der Drahtbügelebene E einschließt.

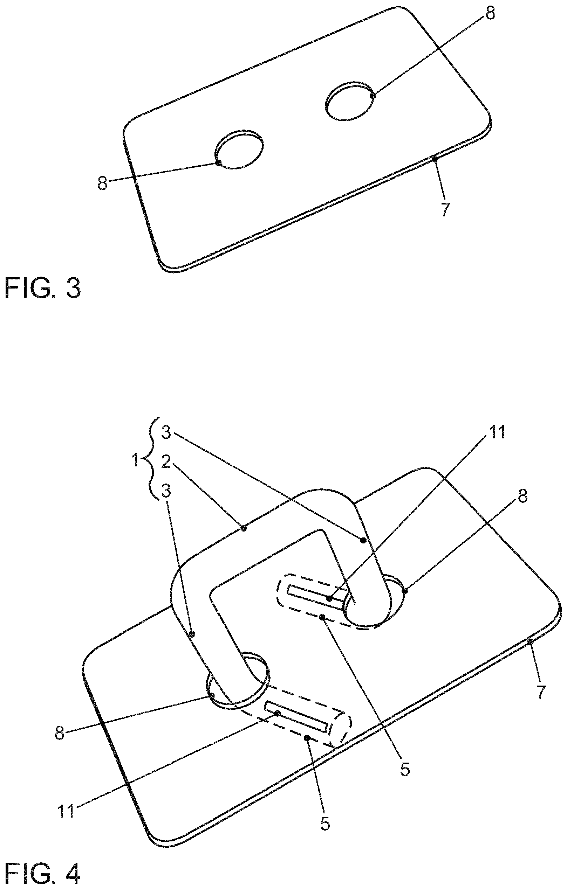

Der Haltebügel 1 wird in das in Fig. 3 dargestellte, flächige Blechteil 7 in noch zu beschreibender Weise in die Position eingesetzt, die die Fig. 4 zeigt.

Dazu sind in dem Blechteil 7 zwei im Abstand der U-Schenkel 3 eingebrachte, kreissymmetrische Ausnehmungen 8 durch Stanzen, Bohren, etc. eingearbeitet. Die Ausnehmungen 8 sind im Durchmesser etwa 2mm größer als der Außendurchmesser des Runddrahts des Haltebügels 1.

Ferner sind die Biegeradien zwischen den U-Schenkeln 3 und den Fußabschnitten 5 so ausgeführt, dass ein Verschwenken der U-Schenkel 3 in den Ausnehmungen 8 möglich ist. Das Einsetzen des Haltebügels 1 in das Blechteil 7 wird wie folgt durchgeführt:
Zunächst wird der Haltebügel 1 so ausgerichtet, dass einer seiner Fußabschnitte 5 schräg zum Blechteil 7 ausgerichtet ist; der Basissteg 2 ist dabei schräg nach oben gekippt.

Nach dem Einführen des einen Fußabschnitts 5 in die Ausnehmung 8 wird der Haltebügel 1 um die Biegung zwischen dem eingeführten Fußabschnitt 5 und dem daran anschließenden U-Schenkel 3 verschwenkt, wobei der Basissteg 2, wie mit dem Pfeil 10 in der Fig. 1 angedeutet, auswandert.

Dies bewirkt, dass der andere (noch nicht eingeführte) Fußabschnitt 5 des Haltebügels 1 in den Bereich der zugeordneten Blechteil-Ausnehmung 8 verschwenkt wird und in diese eingefädelt werden kann.

Sodann können die U-Schenkel 3 über die Biegungen zu den Fußabschnitten 5 in Gegenrichtung zum Pfeil 10 aufgerichtet und der Haltebügel 1 in die in Fig. 4 dargestellte Endposition verschwenkt werden.

Anschließend können die Fußabschnitte 5 bevorzugt im bekannten Buckelschweißverfahren (eingezeichnete Linien 11) stoffschlüssig mit dem Blechteil 7 verbunden werden.

Das Blechteil 7 kann beispielsweise durch Punktschweißverbindungen anschließend an der vorgegebenen Position an einem Karosseriebauteil des Kraftfahrzeugs befestigt werden. Das Blechteil 7 kann abweichend vom gezeigten Ausführungsbeispiel ein Strukturbauteil der Karosserie des Kraftfahrzeugs sein.

## Patentansprüche

1. Befestigungsanordnung für ein Fahrzeug, mit einem karosserieseitigen Blechteil (7) und einem daran befestigten U-förmigen Haltebügel (1), der einen Basissteg (2) mit daran anschließenden U-Schenkeln (3) aufweist, von denen endseitig Fußabschnitte (5) abgewinkelt sind, die das karosserieseitige Blechteil (7) untergreifen und mit diesem insbesondere verschweißt sind, wobei das Blechteil (7) im Abstand der beiden U-Schenkeln (3) des Haltebügels (1) voneinander separate Ausnehmungen (8) aufweist, durch die die U-Schenkel (3) mit ihren Fußabschnitten (5) geführt sind, wobei die U-Schenkel (3) und der Basissteg (2) des Haltebügels (1) eine Drahtbügelebene (E) aufspannen, und dass die Fußabschnitte (5) von der Drahtbügelebene (E) abragen, **dadurch gekennzeichnet dass** die Fußabschnitte (5) mit Bezug auf die Drahtbügelebene (E) gegenläufig, das heißt in entgegengesetzten Richtungen abragen.

2. Befestigungsanordnung nach Anspruch 1, **dadurch gekennzeichnet, dass** der Haltebügel (1) aus einem Rundmaterial, insbesondere Draht, hergestellt ist, und dass die beiden Ausnehmungen (8) querschnittsgrößer als das Rundmaterial ausgelegt sind.

3. Befestigungsanordnung nach Anspruch 1 oder 2, **dadurch gekennzeichnet, dass** die Fußabschnitte (5) um einen Biegewinkel (α) von 90° von den U-Schenkeln (3) abgebogen sind.

4. Befestigungsanordnung nach einem der vorhergehenden Ansprüche, **dadurch gekennzeichnet, dass** die Fußabschnitte (5) in einer zur Drahtbügelebene (E) rechtwinkligen Ebene liegen und/oder zueinander parallel angeordnet sind.

5. Befestigungsanordnung nach einem der vorhergehenden Ansprüche, **dadurch gekennzeichnet, dass** die beiden Fußabschnitte in einer zueinander verschränkten Anordnung positioniert sind, bei der jeder Fußabschnitt (5) in Richtung auf den gegenüberliegenden U-Schenkel geneigt ist und einen spitzen Winkel (β) mit der Drahtbügelebene (E) einschließt.

6. Befestigungsanordnung nach einem der vorhergehenden Ansprüche, **dadurch gekennzeichnet, dass** Blechteil (7) nach der Befestigung des Haltebügels (1) mit einem angrenzenden Strukturbauteil der Karosserie eines Kraftfahrzeugs fest verbindbar ist.

7. Befestigungsanordnung nach einem der Ansprüche 1 bis 4, **dadurch gekennzeichnet, dass** der Haltebügel (1) unmittelbar in ein Strukturbauteil der Karosserie des Kraftfahrzeugs eingesetzt ist.

## Claims

1. Fastening arrangement for a vehicle, having a vehicle-body-side sheet-metal part (7) and a U-shaped retaining clip (1) which is fastened thereto and which has a basic web (2) having U limbs (3) which connect thereto and from which foot portions (5) are angled at the ends, said foot portions engaging under, and in particular being welded to, the vehicle-body-side sheet-metal part (7), wherein the sheet-metal part (7) has apertures (8) which are separate from each other at the spacing of the two U limbs (3) of the retaining clip (1) and through which the U limbs (3) are guided with the foot portions (5) thereof, wherein the U limbs (3) and the basic web (2) of the retaining clip (1) span a wire clip plane (E), and in that the foot portions (5) project from the wire clip plane (E), **characterized in that** the foot portions (5) project in an opposing manner, that is to say in opposite directions, with respect to the wire clip plane (E).

2. Fastening arrangement according to Claim 1, **characterized in that** the retaining clip (1) is produced from a round material, in particular wire, and **in that** the two apertures (8) are designed to be larger in cross section than the round material.

3. Fastening arrangement according to Claim 1 or 2, **characterized in that** the foot portions (5) are bent about a bending angle (α) of 90° from the U limbs (3) .

4. Fastening arrangement according to one of the preceding claims, **characterized in that** the foot portions (5) lie in a plane which is at a right angle to the wire clip plane (E) and/or are arranged parallel to each other.

5. Fastening arrangement according to one of the preceding claims, **characterized in that** the two foot portions are positioned in a mutually staggered arrangement in which each foot portion (5) is inclined in the direction of the opposite U limb and encloses an acute angle (β) with the wire clip plane (E) .

6. Fastening arrangement according to one of the preceding claims, **characterized in that**, after the retaining clip (1) has been fastened, the sheet-metal part (7) can be fixedly connected to an adjoining structural component of the vehicle body of a motor vehicle.

7. Fastening arrangement according to one of Claims 1 to 4, **characterized in that** the retaining clip (1) is inserted directly into a structural component of the vehicle body of the motor vehicle.

## Revendications

1. Système de fixation pour un véhicule, comprenant une pièce en tôle (7) côté carrosserie et un étrier de retenue (1) en forme de U, fixé à celle-ci, qui présente une section de base (2) avec des branches du U (3) s'y raccordant, depuis lesquelles, du côté de l'extrémité, des portions de pieds (5) s'étendent sous forme coudée, lesquelles viennent en prise par le dessous avec la pièce en tôle (7) côté carrosserie et sont notamment soudées à celle-ci, la pièce en tôle (7) présentant des évidements (8) séparés les uns des autres à distance des deux branches du U (3) de l'étrier de retenue (1), à travers lesquels les branches du U (3) sont guidées avec leurs portions de pieds (5), les branches du U (3) et la section de base (2) de l'étrier de retenue (1) couvrant un plan d'étrier en fil métallique (E), et en ce que les portions de pieds (5) font saillie depuis le plan d'étrier en fil métallique (E), **caractérisé en ce que** les portions de pieds (5) font saillie en sens inverse par rapport au plan d'étrier en fil métallique (E), c'est-à-dire dans des directions opposées.

2. Système de fixation selon la revendication 1, **caractérisé en ce que** l'étrier de retenue (1) est fabriqué à partir de matériau de section ronde, en particulier des fils métalliques, et **en ce que** les deux évidements (8) présentent une plus grande section transversale que celle du matériau rond.

3. Système de fixation selon la revendication 1 ou 2, **caractérisé en ce que** les portions de pieds (5) sont coudées suivant un angle de flexion (α) de 90° par rapport aux branches du U (3).

4. Système de fixation selon l'une quelconque des revendications précédentes, **caractérisé en ce que** les portions de pieds (5) sont situées dans un plan perpendiculaire au plan d'étrier en fil métallique (E) et/ou sont disposées parallèlement l'une à l'autre.

5. Système de fixation selon l'une quelconque des revendications précédentes, **caractérisé en ce que** les deux portions de pieds sont positionnées suivant un agencement croisé l'une par rapport à l'autre dans lequel chaque portion de pied (5) est inclinée dans la direction de la branche du U opposée et forme un angle aigu (β) avec le plan d'étrier en fil métallique (E).

6. Système de fixation selon l'une quelconque des revendications précédentes, **caractérisé en ce que** la pièce en tôle (7), après la fixation de l'étrier de retenue (1), peut être connectée fixement à un composant structurel adjacent de la carrosserie d'un véhicule automobile.

7. Système de fixation selon l'une quelconque des revendications 1 à 4, **caractérisé en ce que** l'étrier de retenue (1) est directement inséré dans un composant structurel de la carrosserie du véhicule automobile.
